(19) Europäisches Patentamt
European Patent Office
Office européen des brevets

(11) EP 0 776 286 B1

(12) EUROPÄISCHE PATENTSCHRIFT

(45) Veröffentlichungstag und Bekanntmachung des Hinweises auf die Patenterteilung:
06.10.1999 Patentblatt 1999/40

(51) Int. Cl.[6]: B60T 7/12, B60T 13/72, B60T 8/32, B60T 13/66

(21) Anmeldenummer: 95929023.0

(22) Anmeldetag: 28.07.1995

(86) Internationale Anmeldenummer:
PCT/EP95/02997

(87) Internationale Veröffentlichungsnummer:
WO 96/06763 (07.03.1996 Gazette 1996/11)

(54) **VERFAHREN ZUR STEUERUNG DES BREMSDRUCKS IN ABHÄNGIGKEIT VON DER PEDALBETÄTIGUNGSGESCHWINDIGKEIT**

PROCESS FOR CONTROLLING BRAKING PRESSURE DEPENDING ON THE RATE OF PEDAL OPERATION

PROCEDE DE REGULATION DE LA PRESSION DE FREINAGE EN FONCTION DE LA VITESSE D'ACTIONNEMENT DE LA PEDALE

(84) Benannte Vertragsstaaten:
DE FR GB

(30) Priorität: 27.08.1994 DE 4430461

(43) Veröffentlichungstag der Anmeldung:
04.06.1997 Patentblatt 1997/23

(73) Patentinhaber:
Continental Teves AG & Co. oHG
60488 Frankfurt (DE)

(72) Erfinder: JOKIC, Mile
D-60349 Frankfurt am Main (DE)

(56) Entgegenhaltungen:
WO-A-93/24353          WO-A-94/11226
DE-C- 4 028 290        DE-C- 4 325 940
DE-C- 4 338 068        DE-C- 4 413 172

**Beschreibung**

Die Erfindung bezieht sich auf ein Verfahren zur Steuerung des Bremsdruckes einer Kraftfahrzeug-Bremsanlage in Abhängigkeit von der Geschwindigkeit der Pedalbetätigung, mit Hilfe eines Bremsdruckgebers, der beim Überschreiten einer Zuschaltschwelle durch eine Fremdkraft angesteuert wird.

Aus der DE 40 28 290 C1 ist bereits ein verfahren zur Verkürzung des Bremsweges in kritischen Fahrsituationen bekannt, bei dem eine Fremdkraft für einen erhöhten Bremsdruck sorgt, sobald die Pedalbetätigungsgeschwindigkeit einen Schwellwert übersteigt. Man geht davon aus, daß es Fälle gibt, in denen bei einer Panik- oder Notbremsung der Fahrer das Pedal zwar mit hoher Geschwindigkeit betätigt, jedoch nur eine unzureichende Kraft auf das Pedal ausübt. Durch die Fremdkraft wird daher in dieser Situation der Fahrer unterstützt und dadurch eine Bremskraft hervorgerufen, die höher ist als die Bremskraft, die bei normaler Pedalbetätigung der Pedalkraft entsprechen würde.

Aus verständlichen Gründen muß sichergestellt sein, daß die Fremdkraft nicht ungewollt auftritt, weil dies eine unerwünscht hohe, mit einem Auffahrrisiko des nachfolgenden Fahrzeugs verbundene Verzögerung des Fahrzeugs zur Folge hätte.

Die Zuschaltschwelle der Fremdkraft sollte also einerseits so niedrig liegen, daß auch bei einem nicht allzu kräftigen Fahrer diese Schwelle in einer Notsituation mit Sicherheit überschritten wird, doch sollte sie andererseits so hoch liegen, daß eine unbeabsichtigte Fremdkraftansteuerung unterbleibt. Das Erfüllen dieser gegensätzlichen Forderungen bereitet insbesondere deswegen Schwierigkeiten, weil die Pedalbetätigungscharakteristik eines Fahrzeugs von Fertigungstoleranzen der einzelnen Bauteile und auch von dem Zustand der Bremsanlage und der Bremsflüssigkeit abhängig ist.

Der Erfindung liegt daher die Aufgabe zugrunde, ein Verfahren zu entwickeln, das eine möglichst genaue Einstellung und Einhaltung der Zuschaltschwelle ermöglicht.

Es hat sich herausgestellt, daß diese Aufgabe durch das im Anspruch 1 beschriebene Verfahren gelöst werden kann. Das Besondere des erfindungsgemäßen Verfahrens besteht darin,

- daß die Zuschaltschwelle aus einem von der Pedalgeschwindigkeit abhängigen Grundwert und aus von der Fahrzeuggeschwindigkeit sowie von dem Pedalweg abhängigen Faktoren gebildet wird,
- daß bei Teilbremsungen die Ist-Werte des Pedalwegs und der Fahrzeugverzögerung und/oder des Bremsdruckes ($p_{Ist}$) ermittelt werden,
- daß die Istwerte mit Sollwerten, die Vorgaben, Serien-Mittelwerte oder dergl. sind, verglichen werden,
- daß aus der jeweiligen Abweichung der Ist-Werte von den Sollwerten Korrekturfaktoren ermittelt werden,
- daß aus den ermittelten Korrekturfaktoren nacheinanderfolgender Teilbremsungen Mittelwerte gebildet werden,
- daß aus den gebildeten Mittelwerten in einem Lernverfahren über nacheinanderfolgende Teilbremsungen ein Anpassungsfaktor gebildet wird und
- daß zur Bildung der Zuschaltschwelle der Grundwert zusätzlich zu den von der Fahrzeuggeschwindigkeit sowie von dem Pedalweg abhängigen Faktoren mit dem Anpassungsfaktor multipliziert wird.

Erfindungsgemäß wird also in einem Lernverfahren die Pedalbetätigungscharakteristik auf ein vorgegebenes Verhalten oder auf einen Serien-Mittelwert eingestellt. Die bisher für die Pedalcharakteristik entscheidenden Einflußfaktoren, wie

- Entlüftungszustand der Bremsanlage (Luft im System),
- Belagqualität (weich; hart),
- Leerweg,
- Alterungs- und Verschleißauswirkungen,
- Volumenaufnahme der hydraulischen Verbraucher und
- Fertigungstoleranzen verlieren an Bedeutung,

werden kompensiert oder in ihrer Auswirkung entscheidend gemildert.

Die Zuschaltschwelle kann nun recht genau auf den vorgenannten Kompromißwert eingestellt werden, der Fahrer mit unterschiedlichen Pedalbetätigungsgewohnheiten zufriedenstellt.

Nach einem vorteilhaften Ausführungsbeispiel der Erfindung werden während der einzelnen Teilbremsvorgänge die Ist-Werte des Pedalwegs und der Fahrzeugverzögerung gemessen, der Pedalweg-Ist-Wert mit dem Sollwert der Fahrzeugverzögerung oder dem Sollwert des Bremsdruckes verglichen und ein Korrekturfaktor aus den Soll- und Ist-Werten abgeleitet.

Weiterhin besteht ein vorteilhaftes Ausführungsbeispiel des erfindungsgemäßen Verfahrens darin, daß der Anpassungsfaktor durch Mittelwertbildung über nacheinanderfolgende Teilbremsungen, bei denen der Pedalweg und/oder die Fahrzeugverzögerung einen vorgegebenen Mindestwert überschreiten, gebildet wird.

Es ist vorteilhaft, die Korrekturfaktoren durch Vergleich der Ist-Werte mit tabellarisch, z.B. im Festwertspeicher eines Mikrocontrollers, gespeicherten Sollwerten zu ermitteln.

Des weiteren besteht eine vorteilhafte Ausführungsart der Erfindung darin, daß durch Plausibilitätsüberlegungen bestimmte Meßwerte während des Lernverfahrens ausgeschlossen werden. So ist es sinnvoll, bei der Mittelwertberechnung zur Bildung des Anpassungsfaktors außergewöhnliche, z.B. durch Berg- oder Talfahrt oder durch Regelungsvorgänge beeinflußte Meßwerte, die natürlich von den Normalwerten oder Mittelwerten abweichen, im Lernvorgang des Anpassungsfaktors nicht zu berücksichtigen.

Schließlich besteht eine vorteilhafte Ausführungsart des erfindungsgemäßen Verfahrens noch darin, die Pedalbetätigungsgeschwindigkeit, wenn es sich um einen Bremsdruckgeber mit einem Unterdruck-Bremskraftverstärker handelt, mit Hilfe eines den Membranweg des Verstärkers messenden Sensors zu ermitteln.

Weitere Einzelheiten der Erfindung gehen aus der folgenden Beschreibung anhand der beigefügten Abbildungen hervor.

Es zeigen

Fig. 1 in schematischer Darstellung die wichtigsten Komponenten einer Bremsanlage zur Durchführung des erfindungsgemäßen Verfahrens und

Fig. 2 A - C Diagramme zur Veranschaulichung der Arbeitsweise der Bremsanlage nach Fig. 1.

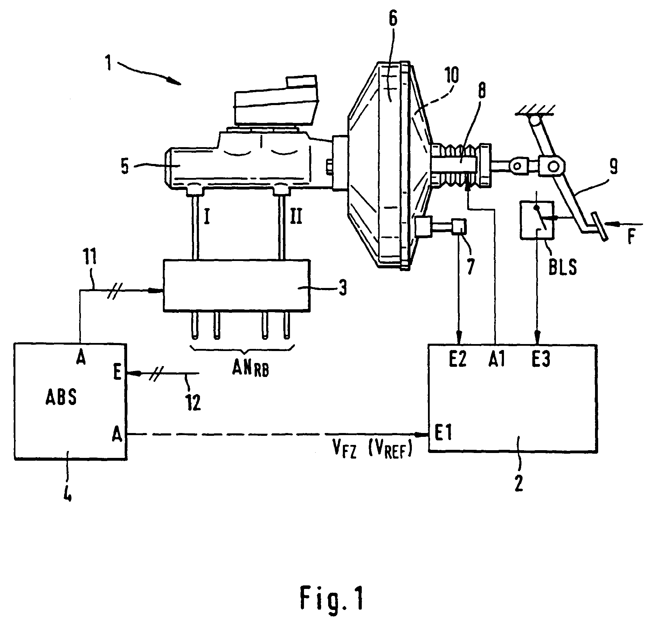

Nach dem Ausführungsbeispiel gemäß Fig. 1 besteht die Bremsanlage im wesentlichen aus einem pedalbetätigten Bremsdruckgeber 1, einem elektronischen Steuergerät 2, einem Ventilblock 3 und einem Regler 4. Die Komponenten 1 und 2 sind zur Durchführung des erfindungsgemäßen Verfahrens erforderlich, während eine Verwendung der Komponenten 3 und 4, die die Bremsanlage zu einem Antiblockiersystem (ABS) erweitern, nur deswegen sinnvoll ist, weil eine Bremsanlage mit Fremdkraftansteuerung zweckmäßigerweise so ausgelegt wird, daß bei Fremdkraftansteuerung die Blockierschwelle erreicht wird.

Der Bremsdruckgeber 1 setzt sich aus einem Tandemhauptzylinder 5 mit einem vorgeschalteten Unterdruck-Bremskraftverstärker 6 zusammen. Der Pedalweg wird im vorliegenden Fall durch einen Membranwegsensor 7 erfaßt, der ein elektrisches, den zurückgelegten Pedalweg anzeigendes Signal erzeugt und dem elektronischen Steuergerät 2 zuleitet. Am Eingang des Unterdruck-Bremskraftverstärkers 6 befindet sich ein elektromechanisch betätigbares Ventil 8, durch dessen Ansteuerung eine Fremdkraft, die in gleicher Richtung wie die auf das Pedal 9 ausgeübte Pedalkraft F wirkt, ausgeübt wird. Über das Ventil wird zur Fremdkraftansteuerung eine Verbindung von der Atmosphäre zur Unterdruckkammer 10 des Bremskraftverstärkers 6 hergestellt und dadurch in bekannter Weise eine Kraft auf die (nicht gezeigten) Kolben des Hauptzylinders 5 ausgeübt, die schließlich den erwünschten Bremsdruck in den Bremskreisen I,II der Bremsanlage hervorrufen.

In Fig. 1 ist außerdem noch ein Bremsbetätigungs- oder Bremslichtschalter BLS symbolisch angedeutet, dessen Ausgangssignal ebenfalls dem Steuergerät 2 über einen Eingang E3 zugeführt wird und der u.a. zur Absicherung und Überwachung einzelner Funktionen der Bremsanlage dient.

Die Pedalbetätigungsgeschwindigkeit $v_{ped}$ wird mit Hilfe der Elektronik des Steuergerätes 2 aus den Ausgangssignalen des Membranwegsensors 7 abgeleitet.

Außerdem wird dem Steuergerät 2 über einen Eingang E1 die Fahrzeuggeschwindigkeit $V_{FZ}$ oder eine Fahrzeugreferenzgeschwindigkeit $V_{REF}$ signalisiert. Bei Anlagen mit ABS kann dieses Signal unmittelbar, wie durch die Strichelung angedeutet ist, dem ABS-Regler 4 entnommen werden.

Der Ventilblock 3, an der über die angedeuteten Anschlüsse $AN_{RB}$ die Radbremsen angeschlossen werden, dient zur Bremsdruckmodulation während einer Blockierschutzregelung. Über eine Sammelleitung 11 werden die Ventile durch den ABS-Regler 4 gesteuert. Eingangssignale zur Gewinnung der Bremsdrucksteuersignale werden dem ABS-Regler 4 über eine Mehrfachleitung 12 zugeführt; wichtige Eingangsinformationen für einen ABS-Regler werden bekanntlich durch radindividuelle Drehgeschwindigkeitssensoren gewonnen.

Hauptzylinder 5 und Bremskraftverstärker 6 nach Fig. 1 arbeiten bei Teilbremsungen, d.h. bei Bremsvorgängen ohne Ansprechen der Regelung, in konventioneller Weise.

Kriterium für eine Panik- oder Notbremsung ist das Überschreiten einer bestimmten Pedal- bzw. Pedalbetätigungsgeschwindigkeit. Wird die Zuschaltschwelle überschritten, setzt die Fremdkraftansteuerung ein, indem über den Ausgang A1 des Steuergerätes 2 das elektromechanische Ventil 8 angesteuert wird, dadurch Druckausgleich in der Unterdruckkammer 10 des Unterdruck-Bremskraftverstärkers 6 herbeigeführt und der Bremskraftverstärker 6 voll ausgesteuert wird. Nach dem Erreichen der Zuschaltschwelle wird also in den Bremskreisen I,II der Bremsanlage ein Bremsdruck aufgebaut, der nicht mehr der Pedalkraft F proportional ist, sondern über den der Pedalkraft F entsprechenden Druck hinausgeht. Ein ungewolltes Überschreiten der Zuschaltschwelle, obwohl nur eine Teilbremsung beabsichtigt war, kann folglich im Verkehrsgeschehen zu gefährlichen Situationen führen.

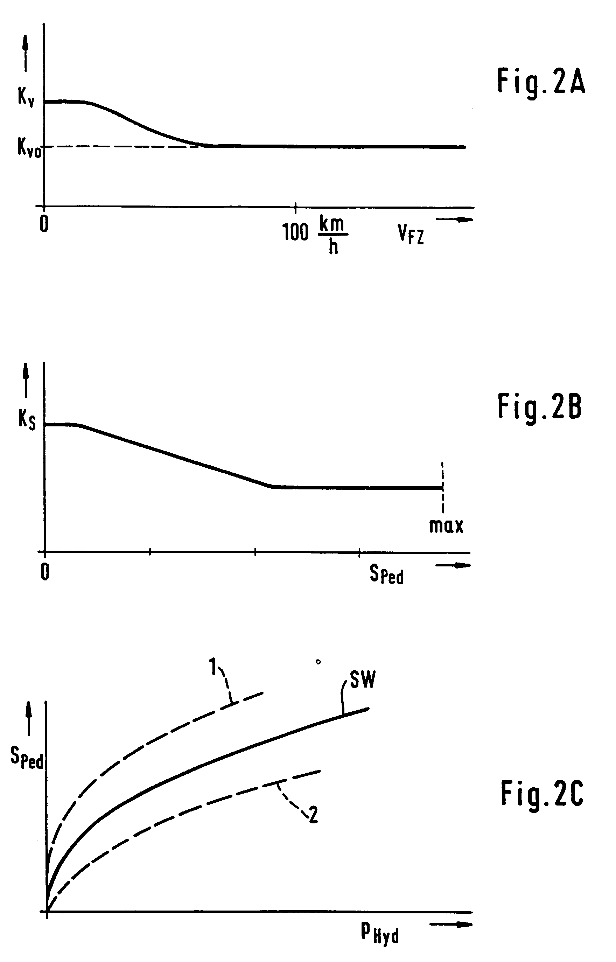

Die Zuschaltschwelle, nämlich der Geschwindigkeitswert der Pedalbetätigung, bei dessen Erreichen oder Überschreiten die Fremdkraftansteuerung einsetzt, wird durch einen Grundwert GW definiert, der mit einem von der Fahrzeuggeschwindigkeit abhängigen Faktor $K_V$ und mit einem von der Pedal- bzw. Membranstellung abhängigen Faktor $K_S$ multipliziert wird. Fig. 2A zeigt den grundsätzlichen Verlauf des von der Fahrzeuggeschwindigkeit abhängigen Faktors $K_V$, Fig. 2B den Verlauf des Faktors $K_S$ über dem Membranweg. Bei den Kurven nach Fig. 2A und 2B wurde für alle Größen ein linearer Maßstab gewählt.

Gemäß Fig. 2A ist bei geringer Geschwindig-

keit der Faktor $K_v$ relativ hoch, nimmt mit wachsender Geschwindigkeit ab, um schließlich ab einer vorgegebenen Geschwindigkeitsschwelle in einen konstanten Wert $K_{vo}$ überzugehen. Der von der Membran- oder Pedalstellung $S_{Ped}$ abhängige Faktor zeigt ein ähnliches Bild. Bei Pedalverschiebung ist anfangs der Faktor $K_S$ relativ hoch, nimmt bei fortschreitender Pedalverschiebung zunächst ab, um nach dem Erreichen einer bestimmten Pedalstellung in einen konstanten Wert überzugehen.

Die tatsächlich mit einer bestimmten Pedalkraft F hervorgerufene Pedalbetätigungs- bzw. Membranverschiebungsgeschwindigkeit $V_{ped}$ hängt jedoch in einem hohen Maße von der Pedalbetätigungscharakteristik ab, die das "Pedalgefühl" prägt. Diese Pedalbetätigungscharakteristik wird jedoch bei gleichem Fahrzeug und gleicher Bremsanlage in hohem Maße von der jeweiligen Bremseneinstellung bzw. von Fertigungstoleranzen, vom Leerweg, der Belagqualität usw. und ganz besonders von dem Betriebszustand der Bremsanlage bestimmt. Eine ungenügende Entlüftung der Bremsanlage macht sich sehr stark bemerkbar. Die Abweichungen von den gewünschten Werten der Pedalbetätigungscharakteristik, d.h. von den Sollwerten oder von den Serien-Mittelwerten, sind erheblich. Fig. 2C, die den Pedalweg $S_{Ped}$ über dem hydraulischen Druck $p_{Hyd}$ in der Bremsanlage wiedergibt, veranschaulicht die in der Praxis auftretenden Toleranzen. Die mittlere, durchgezogene Kennlinie bezieht sich auf den Sollwert oder Serien-Mittelwert, während die gestrichelte obere Kurve 1 eine Bremse mit "weichem" Pedalgefühl, die untere gestrichelte Kurve 2 eine Bremsanlage mit "harter" Pedalbetätigungscharakteristik wiedergibt. Im Vergleich zu dem Sollwert nach der Kurve SW weist das Verhalten der Bremse nach Kurve 1 auf einen ungünstigen Betriebszustand, auf Luft in der Bremsanlage oder auf andere nachteilige Effekte hin. Eine Bremsanlage mit dem Verhalten nach Kurve 2 liegt über dem Qualitätsstandard nach dem Serien-Mittelwert oder Sollwert SW.

Mit dem erfindungsgemäßen Verfahren werden nun die Fertigungstoleranzen und nachteilige Einflüsse, die hohe Abweichungen der Pedalbetätigungscharakteristik von dem Sollwert zur Folge haben, ausgeglichen oder zumindest gemildert. Hierzu wird bei Teilbremsungen der tatsächliche Pedalwert $S_{Ist}$ mit Hilfe des Pedalweg- oder Membranwegsensors 7 gemessen und außerdem die bei diesem Bremsvorgang erreichte Verzögerung $A_{Ist}$ des Fahrzeugs aus der Fahrzeuggeschwindigkeit und deren zeitlichen Änderung errechnet. Diese Verzögerung $a_{Ist}$ läßt auf einen bestimmten Bremsdruck $p_{Ist}$ schließen. Durch Vergleich der Ist-Werte mit den Sollwerten werden Korrekturfaktoren ermittelt, die die Abweichung der Ist-Werte von den Sollwerten wiedergeben. Auf Basis der Messungen und Sollwert-Istwert-Vergleiche während der einzelnen Teilbremsungen wird in einem Lernverfahren durch Mittelwertbildung über eine bestimmte Anzahl aufeinanderfolgender Teilbremsungen ein Anpassungsfaktor Ak gebildet. Der die Zuschaltschwelle bestimmende Grundwert GW wird mit diesem Anpassungsfaktor Ak multipliziert und dadurch die Zuschaltschwelle in der gewünschten Weise verschoben.

Eine Möglichkeit zur Bildung des Korrekturfaktors besteht darin, den Ist-Wert der Pedalstellung oder der Membran-Stellung $S_{Ist}$ mit Hilfe des Wegsensors 7 zu messen, diesen Ist-Wert $S_{Ist}$ mit dem zugehörigen Sollwert des Bremsdruckes oder Sollwert der Verzögerung $a_{soll}$ zu vergleichen und schließlich diesen Sollwert $a_{Soll}$ mit dem Ist-Wert der Fahrzeugverzögerung, die sich durch zeitliche Ableitung der Fahrzeuggeschwindigkeit bestimmen läßt, in Relation zu setzen. Der Korrekturfaktor $F_{K1}$ ergibt sich dann aus der Beziehung

$$F_{K1} = a_{Soll} / a_{Ist}.$$

Der Korrekturfaktor könnte auch in entsprechender Weise durch die Beziehung

$$F'_{K1} = p_{Soll} / p_{Ist}.$$

definiert werden; $p_{Soll}$ ist der erwartete hydraulische Bremsdruck, $p_{Ist}$ der tatsächlich gemessene oder aus der tatsächlichen Fahrzeugverzögerung errechnete Bremsdruck.

Andererseits müßte es auch möglich sein, den Korrekturfaktor $F_{K2}$ durch die Beziehung

$$F_{K2} = s_{Ist} / s_{Soll}$$

zu definieren, wobei wiederum $s_{Soll}$ durch tabellarische Zuordnung des Soll-Bremsdruckes oder der Soll-Fahrzeugverzögerung zu dem tatsächlichen Pedalweg $s_{Ist}$ ermittelt werden kann.

Da die einzelnen Teilbremsungen durch überlagerte Effekte, wie geringes Gefälle oder Anstieg, unterschiedliche Pedalkräfte, Nichlinearitäten usw. voneinander abweichen, ist es erforderlich, aus den jeweils errechneten Korrekturfaktoren Mittelwerte zu bilden und aus diesen dann in einem Lernverfahren den Anpassungsfaktor $A_K$ abzuleiten. Beispielsweise können bereits durch Mittelwertbildung über fünf "Normal"-Teilbremsungen brauchbare Korrekturwerte abgeleitet werden. Als "normal" werden hierbei Bremsvorgänge angesehen, bei denen das Fahrzeug auf einigermaßen ebener Straße fährt; Sonderfälle, wie Bergfahrt oder Talfahrt, die beim Vergleich der Ist-Werte mit den Sollwerten zu Fehlinterpretationen führen könnten, werden durch Plausibilitätsüberlegungen bei der Berechnung der Korrektur- und Anpassungsfaktoren bzw. bei der Mittelwertbildung ausgeschlossen.

Der zuvor definierte Korrekturfaktor $F_{K1}, F'_{K1}, F_{K2}$ gibt Auskunft über den Zustand der Bremsanlage und über die Abweichung von den Sollwerten oder Serien-Mittelwerten. Dies gilt natürlich ebenfalls für den z.B. durch Mittelung aus den Korrekturfaktoren gewonnenen Anpassungsfaktor. Ist im vorliegenden Fall der Faktor $F_K = 1$, entspricht die Bremsanlage dem Serienmittelwert. Ist $F_K > 1$, handelt es sich um eine vergleichsweise schlichte Anlage mit weichem Pedalgefühl; bei $F_K < 1$ liegt die Anlage und ihr Betriebszustand über dem Durchschnitt.

Das Lernverfahren läßt sich je nach Fahrzeugart und gewünschter Pedalbetätigungscharakteristik in unterschiedlicher Weise ausführen. Es ist möglich, das Lernverfahren erst nach einer bestimmten Anzahl von Teilbremsungen in Gang zu setzen. Die Lernprozedur kann bei jedem Starten des Fahrzeugmotors erneut beginnen oder von dem zuvor erlernten Wert auszugehen. In jedem Falle dürfte es sinnvoll sein, die Korrektur der anfänglichen Zuschaltschwelle durch den erlernten Korrektur-und Anpassungsfaktor in relativ kleinen, für den Fahrer unmerklichen, zumindest nicht störenden Schritten durchzuführen.

Die Errechnung der Korrektur- und Anpassungsfaktoren im Steuergerät 2 läßt sich mit elektronischer Hardware oder, wie heutzutage üblich, durch Datenverarbeitung, beispielsweise mit Hilfe eines Mikrocontrollers, verwirklichen. Dem Fachmann stehen beide Möglichkeiten und Mischformen zur Verfügung.

**Patentansprüche**

1. Verfahren zur Steuerung des Bremsdruckes einer Kraftfahrzeug-Bremsanlage in Abhängigkeit von der Geschwindigkeit der Pedalbetätigung($v_{ped}$), mit Hilfe eines Bremsdruckgebers(1), der beim Überschreiten einer Zuschaltschwelle durch eine Fremdkraft angesteuert wird, dadurch **gekennzeichnet,**

   - daß die Zuschaltschwelle aus einem von der Pedalgeschwindigkeit abhängigen Grundwert und aus von der Fahrzeuggeschwindigkeit sowie von dem Pedalweg abhängigen Faktoren gebildet wird,
   - daß bei Teilbremsungen die Ist-Werte des Pedalwegs ($S_{Ist}$) und der Fahrzeugverzögerung ($a_{Ist}$) und/oder des Bremsdruckes ($p_{Ist}$) ermittelt werden,
   - daß die Istwerte mit Sollwerten ($p_{Soll}$,$a_{Soll}$,$s_{Soll}$), die Vorgaben, Serien-Mittelwerte oder dergl. sind, verglichen werden,
   - daß aus der jeweiligen Abweichung der Ist-Werte von den Sollwerten Korrekturfaktoren ($F_{K1}$,$F'_{K1}$,$F_{K2}$) ermittelt werden,
   - daß aus den ermittelten Korrekturfaktoren nacheinanderfolgender Teilbremsungen Mittelwerte gebildet werden,
   - daß aus den gebildeten Mittelwerten in einem Lernverfahren über nacheinanderfolgende Teilbremsungen ein Anpassungsfaktor ($A_K$) gebildet wird und

   - daß zur Bildung der Zuschaltschwelle der Grundwert (GW) zusätzlich zu den von der Fahrzeuggeschwindigkeit sowie von dem Pedalweg abhängigen Faktoren mit dem Anpassungsfaktor multipliziert wird.

2. Verfahren nach Anspruch 1, dadurch **gekennzeichnet,** daß während der einzelnen Teilbremsungen die Ist-Werte des Pedalwegs ($S_{Ist}$) und der Fahrzeugverzögerung ($a_{Ist}$) gemessen werden, der Ist-Wert des Pedalweges ($S_{Ist}$) mit dem Sollwert der Fahrzeugverzögerung ($a_{Soll}$) oder mit dem Sollwert des Bremsdruckes ($p_{Soll}$) verglichen wird und ein Korrekturfaktor ($F_{K1}$,$F'_{K1}$) nach der Beziehung

$$F_{K1} = a_{Soll}/a_{Ist} \text{ oder}$$

$$F'_{K1} = p_{Soll}/p_{Ist}$$

   gebildet wird, wobei bedeuten

   | | |
   |---|---|
   | $a_{Soll}$ | = Sollwert der Fahrzeugverzögerung |
   | $a_{Ist}$ | = Ist-Wert der Fahrzeugverzögerung |
   | $p_{Soll}$ | = Soll-Bremsdruck |
   | $p_{Ist}$ | = Ist-Bremsdruck. |

3. Verfahren nach Anspruch 1, dadurch **gekennzeichnet,** daß während der einzelnen Teilbremsungen die Ist-Werte des Pedalwegs ($s_{Ist}$) und der Fahrzeugverzögerung ($a_{Ist}$) oder des Bremsdruckes ($p_{Ist}$) gemessen werden, der Ist-Wert der Fahrzeugverzögerung ($a_{Ist}$) oder des Bremsdruckes ($p_{Ist}$) mit dem Sollwert des Pedalweges ($s_{Soll}$) verglichen wird und ein Korrekturfaktor ($F_{K2}$) nach der Beziehung

$$F_{K2} = s_{Ist} / s_{Soll}$$

   gebildet wird.

4. Verfahren nach einem oder mehreren der Ansprüche 1 bis 3, dadurch **gekennzeichnet,** daß der Anpassungsfaktor ($A_K$) durch Mittelwertbildung über nacheinanderfolgende Teilbremsungen, bei denen der Pedalweg und/oder die Fahrzeugverzögerung vorgegebene Mindestwerte überschreiten, gebildet wird.

5. Verfahren nach einem oder mehreren der Ansprüche 1 bis 4, dadurch **gekennzeichnet,** daß die Korrekturfaktoren ($F_{K1}$,$F_{K1'}$,$F_{K2}$) durch Vergleich der Ist-Werte mit tabellarisch gespeicherten Sollwerten, z.B. im Festwertspeicher eines Mikrocontrollers, ermittelt werden.

6. Verfahren nach Anspruch 4 oder 5, dadurch **gekennzeichnet,** daß im Rahmen des Lernverfahrens bzw. bei der Mittelwertbildung zur Bestimmung des Anpassungsfaktors außergewöhnliche, z.B. durch Berg- oder Talfahrt oder durch einen Regelvorgang bedingte Meßwerte ausgeschlossen werden.

7. Verfahren nach einem oder mehreren der Ansprüche 1 bis 6, dadurch **gekennzeichnet,** daß die Pedalbetätigungsgeschwindigkeit bei Verwendung eines mit einem Unterdruck-Bremskraftverstärker (6) ausgerüsteten Bremsdruckgebers (1) mit Hilfe eines des Membranweg des Bremskraftverstärkers (6) messenden Sensors (7) ermittelt wird.

## Claims

1. Method of controlling the braking pressure of an automotive vehicle brake system as a function of the rate of pedal actuation ($v_{ped}$), by way of a braking pressure generator (1) which is driven by an independent force when an actuation threshold is exceeded,
   **characterized**

   - in that the actuation threshold is defined by a basic value which is responsive to pedal speed, and by factors which are responsive to the vehicle speed and the pedal travel,
   - in that the actual values of the pedal travel ($S_{Ist}$) and the vehicle deceleration ($a_{Ist}$) and/or the braking pressure ($p_{Ist}$) are determined in partial braking operations,
   - in that the actual values are compared with nominal values ($p_{Soll}$, $a_{Soll}$, $s_{Soll}$), such as preset standards, series mean values, etc.,
   - in that correction factors ($F_{K1}$, $F'_{K1}$, $F_{K2}$) are determined from the respective difference between the actual values and the nominal values,
   - in that mean values are produced from the correction factors determined in successive partial braking operations,
   - in that an adaptation factor ($A_K$) is calculated from the produced mean values in a learning process over successive partial braking operations, and
   - in that the basic value (GW), in addition to the factors responsive to the vehicle speed and the pedal travel, is multiplied by the adaptation factor to determine the actuation threshold.

2. Method as claimed in claim 1,
   **characterized** in that the actual values of the pedal travel ($S_{Ist}$) and the vehicle deceleration ($a_{Ist}$) are measured during the individual partial braking operations, the actual value of the pedal travel ($S_{Ist}$) is compared with the nominal value of the vehicle deceleration ($a_{Soll}$) or with the nominal value of the braking pressure ($p_{Soll}$), and a correction factor ($F_{K1}$, $F'_{K1}$) is determined according to the relation

$$F_{K1} = a_{Soll}/a_{Ist}, \text{ or}$$

$$F'_{K1} = p_{Soll}/p_{Ist},$$

wherein

$a_{Soll}$     is the nominal value of the vehicle acceleration
$a_{Ist}$     is the actual value of the vehicle acceleration
$p_{Soll}$     is the nominal braking pressure
$p_{Ist}$     is the actual braking pressure.

3. Method as claimed in claim 1,
   **characterized** in that the actual values of the pedal travel ($S_{Ist}$) and the vehicle deceleration ($a_{Ist}$) or the braking pressure ($p_{Ist}$) are measured during the individual partial braking operations, the actual value of the vehicle deceleration ($a_{Ist}$) or the braking pressure ($p_{Ist}$) is compared with the nominal value of the pedal travel ($s_{Soll}$), and a correction factor ($F_{K2}$) is determined according to the relation

$$F_{K2} = s_{Ist}/s_{Soll}.$$

4. Method as claimed in any one or more of claims 1 to 3,
   **characterized** in that the adaptation factor ($A_K$) is determined by calculating a mean value over successive partial braking operations, when the pedal travel and/or the vehicle deceleration exceed predetermined minimum values.

5. Method as claimed in any one or more of claims 1 to 4,
   **characterized** in that the correction factors ($F_{K1}$, $F_{K1'}$, $F_{K2}$) are determined by comparison of the actual values with nominal values stored in tables, for example, in the read-only memory of a microcontroller.

6. Method as claimed in claim 4 or claim 5,
   **characterized** in that extraordinary test values, such as values influenced by uphill or downhill driving or by control operations, are excluded from the learning process or the mean value calculation for determining the adaptation factor.

7. Method as claimed in any one or more of claims 1 to 6,
   **characterized** in that the rate of pedal actuation, when using a braking pressure generator (1) equipped with a vacuum brake power booster (6), is determined by a sensor (7) measuring the diaphragm displacement travel of the brake power booster (6).

## Revendications

1. Procédé permettant de commander la pression de frein d'un système de freinage de véhicule automobile, en fonction de la vitesse de l'actionnement de pédale ($v_{ped}$),au moyen d'un générateur de pression de frein (1) qui est commandé, au moyen d'une force extérieure, lors du franchissement vers le haut d'un seuil de mise en Circuit, caractérisé

   - en ce que la valeur de mise en circuit est formée à partir d'une valeur de base, dépendant de la vitesse de pédale, et de facteurs dépendants de la vitesse de véhicule et de la course de pédale,
   - en ce que, lors de freinages partiels, les valeurs réelles de la course de pédale ($s_{Ist}$) et de la décélération de véhicule ($a_{Ist}$) et/ou de la pression de frein ($p_{Ist}$) sont déterminées,
   - en ce que les valeurs réelles sont comparées à des valeurs de consigne $p_{Soll}$, $a_{Soll}$, $s_{Soll}$) qui sont des valeurs préfixées, des valeurs moyennes de série ou analogues,
   - en ce que, pour chacune des valeurs réelles, des facteurs de correction ($F_{K1}$, $F'_{K1}$, $F_{K2}$) sont déterminés à partir des écarts respectifs des valeurs réelles par rapport aux valeurs de consigne,
   - en ce que des valeurs moyennes sont formées à partir des facteurs de correction de freinages partiels successifs qui ont été déterminés,
   - en ce qu'un facteur d'adaptation ($A_K$) est formé à partir des valeurs moyennes formées, au cours d'un procédé d'apprentissage s'étendant sur des freinages partiels successifs et
   - en ce qu'en vue de la formation du seuil de mise en circuit, la valeur de base (GW) est multipliée, en sus des facteurs dépendants de la vitesse de véhicule et de la course de pédale, par le facteur d'adaptation.

2. Procédé suivant la revendication 1, caractérisé en ce que, pendant les différents freinages partiels, les valeurs réelles de la course de pédale ($s_{Ist}$) et la décélération de véhicule ($a_{Ist}$) sont mesurées, la valeur réelle de la course de pédale ($s_{Ist}$) est comparée à la valeur de consigne de la décélération de véhicule ($a_{Soll}$) ou à la valeur de consigne de la pression de frein ($p_{Soll}$) et un facteur de correction ($F_{K1}$, $F'_{K1}$) est formé conformément à la relation

$$F_{K1} = a_{Soll}/a_{Ist} \text{ ou}$$

$$F'_{K1} = p_{Soll}/p_{Ist},$$

   avec les significations suivantes:

$a_{Soll}$ = valeur de consigne de la décélération de véhicule,

$a_{Ist}$ = valeur réelle de la décélération de véhicule,

$p_{Soll}$ = pression de frein de consigne,

$p_{Ist}$ = pression de frein réelle.

3. Procédé suivant la revendication 1, caractérisé en ce que, pendant les différents freinages partiels, les valeurs réelles de la course de pédale ($s_{Ist}$) et de la décélération de véhicule ($a_{Ist}$)ou de la pression de frein ($p_{Ist}$) sont mesurées, la valeur réelle de la décélération de véhicule ($a_{Ist}$) ou de la pression de frein ($p_{Ist}$) est comparée à la valeur de consigne de la course de pédale ($s_{Soll}$) et un facteur de correction ($F_{K2}$) est formé conformément à la relation

$$F_{K2} = s_{Ist}/s_{Soll}.$$

4. Procédé suivant une ou plusieurs des revendications 1 à 3, caractérisé en ce que le facteur d'adaptation ($A_K$) est obtenu par formation de valeur moyenne de freinages partiels successifs pour lesquels la course de pédale et/ou la décélération de véhicule dépassent des valeurs minimales préfixées.

5. Procédé suivant une ou plusieurs des revendications 1 à 4, caractérisé en ce que les facteurs de correction ($F_{K1}$, $F'_{K1}$, $F_{K2}$) sont déterminés par comparaison des valeurs réelles avec des valeurs de consigne conservées en mémoire sous forme de table, par exemple dans la mémoire morte d'un micro-contrôleur.

6. Procédé suivant la revendication 4 ou 5, caractérisé en ce que, dans le cadre du procédé d'apprentissage ou lors de la formation de valeur moyenne servant à déterminer le facteur d'adaptation, des valeurs de mesures sortant de l'ordinaire, par exemple dues à une circulation en côte ou en descente ou à une opération de régulation, sont exclues.

7. Procédé suivant une ou plusieurs des revendications 1 à 6, caractérisé en ce que, lors de l'utilisation d'un générateur de pression de frein (1) pourvu d'un amplificateur de force de freinage (6) à dépression, la vitesse de l'actionnement de pédale est déterminée au moyen d'un détecteur (7) mesurant la course de membrane de l'amplificateur de force de freinage (6).

Fig.1

Fig.2A

Fig.2B

Fig.2C